# EUROPEAN PATENT APPLICATION

(11) **EP 4 732 942 A1**
(43) Date of publication of application: **29.04.2026**
(21) Application number: 25827710.2
(22) Date of filing: 24.07.2025
(51) Int. Cl.: B01J 19/00, B01J 19/24, B01J 8/02, B01J 8/06

(54) **ELECTRICALLY HEATED REACTOR**

(30) Priority: 31.07.2024 KR 20240102065
(71) Applicant: LG Chem, Ltd., Seoul 07336 (KR)
(72) Inventor: PARK, Hongseok, Yuseong-gu, Daejeon 34122 (KR); KANG, Mooseong, Yuseong-gu, Daejeon 34122 (KR); KIM, Huiyong, Yuseong-gu, Daejeon 34122 (KR); KWON, Hyun Jee, Yuseong-gu, Daejeon 34122 (KR); KIM, Lucia, Yuseong-gu, Daejeon 34122 (KR); CHOI, Jaehoon, Yuseong-gu, Daejeon 34122 (KR)
(74) Representative: Hoffmann Eitle
(86) International application number: PCT/KR2025/010951
(87) International publication number: WO 2026/029479

(57) **Abstract**

An electrically heated reactor is disclosed. The electrically heated reactor may include a reaction tube in which a passage through which a reactant flows is formed along a longitudinal direction therein; a porous structure disposed within the reaction tube, having a catalyst coated or supported on a surface thereof, and generating heat upon receiving electric power; a power source configured to supply electric power to the porous structure; and a pair of power application structures respectively disposed at both end portions of the reaction tube, and connecting the power source and the porous structure so that electric power from the power source is supplied to the porous structure.

## Description

### CROSS-REFERENCE TO RELATED APPLICATION

This application claims priority to and the benefit of Korean Patent Application No. 10-2024-0102065 filed in the Korean Intellectual Property Office on 7/31/2024, the entire contents of which are incorporated herein by reference.

The present disclosure relates to an electrically heated reactor, and more particularly, to an electrically heated reactor that may directly heat a catalyst by disposing a porous structure coated with the catalyst inside a reaction tube and supplying electric power to the porous structure.

### [Background Art]

In the chemical industry, natural gas is used as a fuel to maintain high temperatures in various facilities (for example, crackers, reformers, reactors, boilers, and the like). However, heating by the combustion of natural gas is not only inefficient in terms of energy consumption but also a major cause of carbon emission. Accordingly, efforts are being made to replace the heating method utilizing the combustion of natural gas with an electric heating method.

Generally, in the case of a direct electric heating method, an electric current is applied to a tubular reactor having high resistivity to heat the reactor itself. However, the energy efficiency has been poor because the catalyst inside the reactor is heated by heat transfer from the heat generated by the reactor itself. In addition, the entire reactor must be heated to a high temperature in order to heat the catalyst inside the reactor.

The above information disclosed in this Background section is only for enhancement of understanding of the background of the invention, and therefore it may contain information that does not form the prior art that is already known in this country to a person of ordinary skill in the art.

### [Disclosure]

### [Technical Problem]

An embodiment of the present disclosure attempts to provide an electrically heated reactor that may directly heat a catalyst by disposing a porous structure coated with the catalyst within a reaction tube and supplying electric power to the porous structure.

Another embodiment of the present disclosure attempts to provide an electrically direct-heated reactor that may adjust reaction activity within a reaction tube section-by-section by adjusting the diameter or pore size of a porous structure.

### [Technical Solution]

An embodiment of the present disclosure provides an electrically heated reactor, including: a reaction tube in which a passage through which a reactant flows is formed along a longitudinal direction therein; a porous structure disposed within the reaction tube, having a catalyst coated or supported on a surface thereof, and generating heat upon receiving electric power; a power source configured to supply electric power to the porous structure; and a pair of power application structures respectively disposed at both end portions of the reaction tube, and connecting the power source and the porous structure so that electric power from the power source is supplied to the porous structure.

The power application structure may include a conductive porous plate provided at an end portion of the reaction tube and electrically connected to the power source; and a conductive connector electrically connected to the conductive porous plate and contacting one end of the porous structure within the reaction tube to supply electric power from the power source to the porous structure.

The power application structure may further include an insulator disposed between the conductive porous plate and an end portion of the reaction tube to electrically insulate the reaction tube from the conductive porous plate.

The power application structure may further include an elastic member passing through the insulator and electrically and elastically connecting the conductive porous plate and the conductive connector.

The electrically heated reactor may further include a clamper mounted on one end portion of the reaction tube and electrically connected to the power source.

In an aspect, the reaction tube may include a preheating portion positioned between the clamper and one power application structure, and configured to receive electric power to generate heat; and a reaction portion positioned between the pair of power application structures, and having the porous structure disposed therein.

The preheating portion may be positioned upstream of a reaction portion in a moving direction of a reactant.

The electrically heated reactor may further include a cooler configured to cool a connection portion between the power application structure and the power source, the clamper and the power source, and/or the power application structure and the porous structure.

In another aspect, an area of the porous structure may be at least partially varied in a longitudinal direction.

An area of the porous structure at any location may be set according to an amount of heat required at the corresponding location of the reaction tube.

The porous structure may be divided into a plurality of zones, and an area of the porous structure in each zone may be constant, and areas of the porous structure in different zones may be different from each other.

In another aspect, a pore size or porosity of the porous structure may be at least partially varied in a longitudinal direction.

A pore size or porosity of the porous structure at any location may be set according to an amount of heat required at the corresponding location of the reaction tube.

The porous structure may be divided into a plurality of zones, and the pore size or porosity of the porous structure in each zone may be constant, and the pore sizes or porosities of the porous structure in different zones may be different from each other.

The electrically heated reactor may further include a cooler configured to cool a connection portion between the power application structure and the power source and/or the power application structure and the porous structure.

### [Advantageous Effects]

According to the present disclosure, a porous structure coated with a catalyst may be disposed inside a reaction tube and the catalyst may be directly heated by supplying electric power to the porous structure. Accordingly, energy efficiency may be improved.

Additionally, because only the catalyst is heated without heating the entire reaction tube, energy consumption may be reduced.

Furthermore, the temperature of the catalyst may be controlled on a section-by-section basis by adjusting the diameter or the size of the pores of the porous structure in each section. Therefore, the temperature of the catalyst may be maintained uniformly or controlled according to the catalyst condition, thereby suppressing the occurrence of hot spots or cold spots.

In addition, effects that may be obtained or expected from embodiments of the present invention are directly or suggestively described in the following detailed description. That is, various effects expected from embodiments of the present invention will be described in the following detailed description.

### [Description of the Drawings]

The embodiments herein may be better understood by referring to the following description in conjunction with the accompanying drawings in which like reference numerals indicate identically or functionally similar elements, of which:
FIG. 1 is a schematic view illustrating an electrically heated reactor according to a first embodiment of the present disclosure.
FIG. 2 is an enlarged schematic view illustrating an electric power application structure of portion "A" of FIG. 1.
FIG. 3 is a top plan view of a conductive porous plate.
FIG. 4 is a schematic view illustrating an electrically heated reactor according to a second embodiment of the present disclosure.
FIG. 5 is a schematic view illustrating an electrically heated reactor according to a third embodiment of the present disclosure.
FIG. 6 is a schematic view illustrating an electrically heated reactor according to a fourth embodiment of the present disclosure.
FIG. 7 is a schematic view illustrating an electrically heated reactor according to a fifth embodiment of the present disclosure.

It should be understood that the above-referenced drawings are not necessarily to scale, presenting a somewhat simplified representation of various preferred features illustrative of the basic principles of the disclosure. The specific design features of the present disclosure, including, for example, specific dimensions, orientations, locations, and shapes, will be determined in part by the particular intended application and use environment.

### [Mode for Invention]

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. The terms "include" and/or "including" and "comprise" and/or "comprising" specify the presence of the mentioned characteristics, integers, steps, operations, constituent elements, and/or components when used in the present specification, but it will also be understood that this does not exclude the presence or addition of one or more of other characteristics, integers, steps, operations, constituent elements, components, and/or groups thereof. As used herein, the term "and/or" includes any one or all combinations of the associated and listed items.

In addition, it is understood that one or more of the methods below or the aspects thereof may be executed by at least one or more controllers. The term "controller" may refer to a hardware device including a memory and a processor. The memory is configured to store program commands, and the processor is specially programmed so as to execute program commands to perform one or more processes described in more detail below. The controller may control operations of units, modules, components, devices, or similar matters thereof as described herein. Further, it is understood that the following methods may be executed by a device including a controller together with one or more other components as recognized by those skilled in the art.

Further, the controller of the present disclosure may be implemented as a non-transitory computer readable recording medium including program commands executable by a processor. Examples of the computer readable recording medium includes a read only memory (ROM), a random access memory (RAM), a compact disc (CD) ROM, magnetic tapes, floppy discs, flash drives, smart cards, and optical data storage devices, but the computer readable recording medium is not limited thereto. The computer readable recording medium may also be dispersed across the computer network to store and execute program commands by a distributed method, such as a telematics server or a controller area network (CAN).

According to the present disclosure, an electrically heated reactor includes a reaction tube having a passage formed therein in a longitudinal direction through which a reactant passes; a porous structure disposed in the reaction tube, the porous structure having a catalyst coated on a surface thereof and generating heat by receiving electric power; a power source configured to supply electric power to the porous structure; and a pair of power application structures respectively disposed at both ends of the reaction tube and connecting the power source and the porous structure so that the electric power of the power source is supplied to the porous structure. By supplying electric power to the porous structure 50 through the power application structures 30 to allow the porous structure 50 to directly generate heat, energy efficiency during catalyst heating may be improved.

The electrically heated reactor may further include a clamper, which is mounted at one end portion of the reaction tube and is electrically connected to the power source, and the reaction tube between the clamper and the power application structure mounted at the one end portion of the reaction tube may generate heat by the electric power of the power source, thereby preheating the reactant passing through the inside of the corresponding reaction tube.

The porous structure may have a diameter that may change at least partially in a longitudinal direction. Alternatively, the porous structure may have a pore size that may change at least partially in the longitudinal direction. Therefore, the temperature of the catalyst may be maintained uniformly or controlled according to the catalyst condition, thereby suppressing the occurrence of hot spots or cold spots.

Hereinafter, embodiments of the present disclosure will be described in detail with reference to the accompanying drawings.

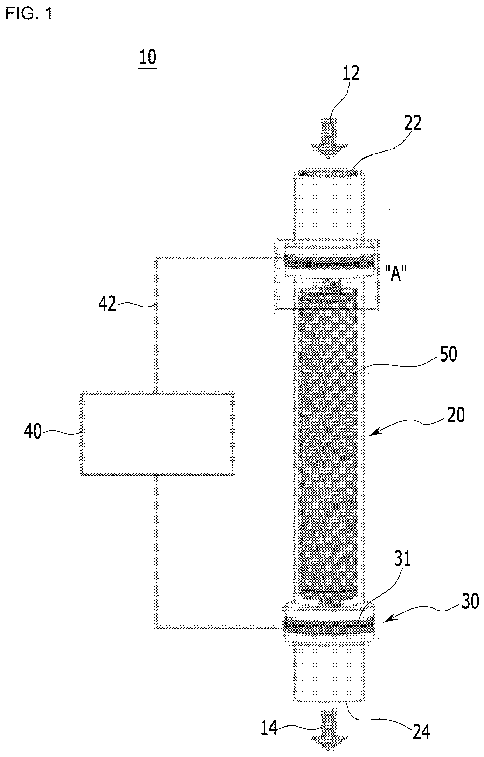

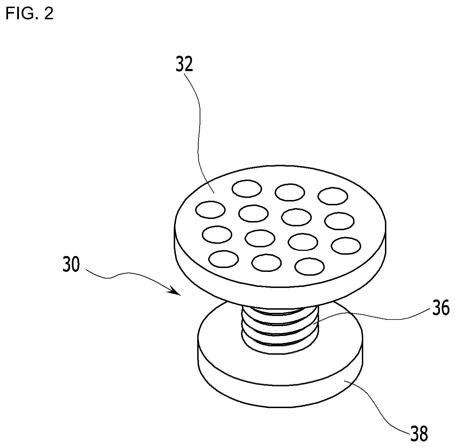

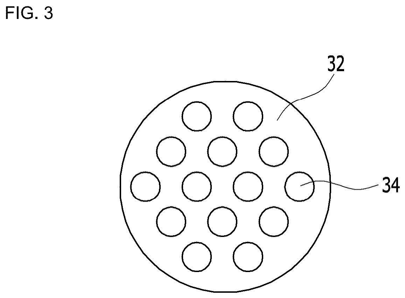

FIG. 1 is a schematic view illustrating an electrically heated reactor according to a first embodiment of the present disclosure, FIG. 2 is an enlarged schematic view illustrating an electric power application structure of portion "A" of FIG. 1, and FIG. 3 is a top plan view of a conductive porous plate.

As shown in FIG. 1, an electrically heated reactor 10 according to the first embodiment of the present disclosure is configured to receive electric power to generate heat, to use the generated heat to heat a catalyst inside, and to use the heated catalyst to react with a reactant 12. The electrically heated reactor 10 includes a reaction tube 20, a porous structure 50, a power source 40, and a pair of power application structures 30.

The reaction tube 20 has a passage formed therein in a longitudinal direction through which the reactant 12 passes. For example, the reaction tube 20 may be formed in an annular pipe shape, and the passage may be formed in the longitudinal direction inside thereof. However, the shape of the reaction tube 20 is not limited to an annular pipe shape.

An inlet 22 is formed at one end of the reaction tube 20, and the reactant 12 required for reaction flows into the reaction tube 20 through the inlet 22. An outlet 24 is formed at the other end of the reaction tube 20, and a product 14 resulting from the reaction and/or an unreacted material 12 that has not reacted flows out of the reaction tube 20 through the outlet 24.

In an example, the reaction tube 20 may be made of an insulating material to prevent heat inside the reaction tube 20 from being dissipated to the outside. In this case, the reaction tube 20 may be electrically separated from the power source 40. That is, an insulator 31 may be disposed between the pair of power application structures 30 and the reaction tube 20 that are electrically connected to the power source 40, so that the reaction tube 20 may be electrically separated from the power source 40.

In another example, the reaction tube 20 is made of an alloy material having a high resistivity (for example, Ni-Cr, Fe-Cr, Fe-Ni-Cr, Fe-Cr-Al, and the like) at least partially, and the corresponding portion may be electrically connected to the power source 40. That is, at least a portion of the reaction tube 20 may be connected to the power source 40 to receive electric power. In this case, since at least a portion of the reaction tube 20 has a high resistivity, when electric power is applied to at least a portion of the reaction tube 20, heat is generated in at least a portion of the reaction tube 20, and the heat may be transferred to the reactant 12 in the passage within the at least a portion of the reaction tube 20 to preheat the reactant 12.

The porous structure 50 is disposed within the reaction tube 20 and is made of an alloy material having a high resistivity (for example, Ni-Cr, Fe-Cr, Fe-Ni-Cr, Fe-Cr-Al, and the like), so when electric power is applied to the porous structure 50, heat is generated in the porous structure 50. A catalyst is coated or supported on the surface of the porous structure 50, and the heat generated by the application of electric power directly heats the catalyst. The reactant 12 coming into contact with the catalyst heated sufficiently above the activation temperature (for example, 600°C to 700°C) undergoes a reaction by the catalyst to become the product 14.

The porous structure 50 may have various shapes but may generally have a cylindrical shape corresponding to the reaction tube 20. The porous structure 50 may be manufactured in the form of a metal foam having a plurality of pores through which gas or fluid may pass, but is not limited thereto. It should be understood that the porous structure 50 may be manufactured in various shapes having a plurality of pores through which the reactant 12 may pass and sufficiently contact the catalyst coated or supported on its surface.

When electric power of the same magnitude is applied, the amount of heat generated in the porous structure 50 is proportional to the heat-generating area of the porous structure 50, and the heat-generating area of the porous structure 50 may be related to the diameter and/or pore size (or porosity) of the porous structure 50. For example, if the diameter of the porous structure 50 is relatively large at an arbitrary position in the longitudinal direction, the amount of heat generated by the porous structure 50 at the corresponding position is relatively large, and if the diameter of the porous structure 50 is relatively small at an arbitrary position in the longitudinal direction, the amount of heat generated by the porous structure 50 at the corresponding position may be relatively small. In addition, if the pore size (or porosity) of the porous structure 50 is relatively large at an arbitrary position in the longitudinal direction, the amount of heat generated by the porous structure 50 at the corresponding position is relatively small, and if the pore size (or porosity) of the porous structure 50 is relatively small at an arbitrary position in the longitudinal direction, the amount of heat generated by the porous structure 50 at the corresponding position may be relatively large.

Accordingly, the diameter and/or pore size (or porosity) of the porous structure 50 may be varied in the longitudinal direction according to the amount of heat required at each position of the porous structure 50 in the longitudinal direction. In this case, the temperature of the catalyst is controlled according to the diameter and/or pore size (or porosity) of the porous structure 50 in the longitudinal direction, thereby suppressing the occurrence of a hot spot or a cold spot.

The power source 40 is configured to supply electric power to the porous structure 50. The power source 40 may be an AC power source or a DC power source. The porous structure 50 may directly generate heat by receiving electric power from the power source 40. Alternatively, the power source 40 may be electrically connected to at least a portion of the reaction tube 20 to supply electric power to at least a portion of the reaction tube 20, and in this case, at least a portion of the reaction tube 20 generates heat and may transfer heat to the reactant 12 within the corresponding position.

The pair of power application structures 30 electrically connects the power source 40 and the porous structure 50. When the power source 40 supplies electric power to the porous structure 50 through the pair of power application structures 30, the porous structure 50 generates heat to heat the catalyst coated or supported on its surface. The reactant 12 coming into contact with the catalyst heated sufficiently above the activation temperature (for example, 600°C to 700°C) undergoes a reaction by the catalyst to become the product 14. One power application structure 30 is mounted at one end portion of the reaction tube 20, is electrically connected to the power source 40 through an electric wire 42, and is also electrically connected to one end portion of the porous structure 50. In addition, the other power application structure 30 is mounted at the other end portion of the reaction tube 20, is electrically connected to the power source 40 through the electric wire 42, and is also electrically connected to the other end portion of the porous structure 50. Accordingly, the electric power of the power source 40 is supplied to the porous structure 50 through the pair of power application structures 30, and the porous structure 50 generates heat to heat the catalyst coated or supported on its surface.

As shown in FIG. 2, the power application structure 30 may include a conductive porous plate 32, an elastic member 36, and a conductive connector 38.

The conductive porous plate 32 is provided at an end portion of the reaction tube 20 and is electrically connected to the power source 40 via the wire 42. As shown in FIG. 3, the conductive porous plate 32 may be formed in a disc shape corresponding to the shape of the reaction tube 20, and a plurality of through-holes 34 are formed in the conductive porous plate 32 so as not to impede the flow of the reactant 12.

The electric power application structure 30 may further include an insulator 31. The insulator 31 is disposed between the conductive porous plate 32 and the end portion of the reaction tube 20 to prevent electric power supplied to the conductive porous plate 32 from being applied to the reaction tube 20. Accordingly, even if electric power is supplied to the conductive porous plate 32, it is not supplied to the reaction tube 20 due to the insulator 31.

The conductive connector 38 is electrically connected to the conductive porous plate 32 and is configured to supply electric power to the porous structure 50 by contacting one end of the porous structure 50. The conductive connector 38 may be provided in the form of a metal foam to minimize the interfacial resistance at the portion contacting the porous structure 50, but is not limited thereto. It will be appreciated that the conductive connector 38 may be provided in any shape capable of transmitting electric power to the porous structure 50 through contact with the porous structure 50.

The elastic member 36 passes through the insulator 31 and elastically and electrically connects the conductive porous plate 32 and the conductive connector 38. The elastic member 36 may absorb thermal expansion of the porous structure 50 and performs a function of maintaining or reinforcing the contact between the conductive connector 38 and the porous structure 50. For example, a hole may be formed in the insulator 31, and the elastic member 36 may pass through the hole to connect the conductive porous plate 32 and the conductive connector 38.

The electrically heated reactor 10 may further include a cooler. The cooler may be configured to cool the connection portions of the pair of electric power application structures 30 and the wire 42 and/or the porous structure 50.

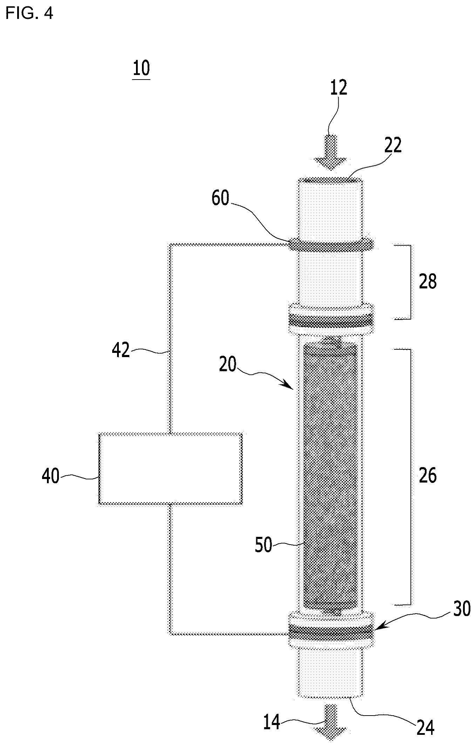

FIG. 4 is a schematic view illustrating an electrically heated reactor according to a second embodiment of the present disclosure.

As shown in FIG. 4, the electrically heated reactor 10 according to the second embodiment of the present disclosure is configured to preheat the reactant 12 before the reactant 12 flowing into the reaction tube 20 contacts the catalyst and undergoes a reaction. For this purpose, the electrically heated reactor 10 according to the second embodiment of the present disclosure includes a reaction tube 20, a porous structure 50, a power source 40, a pair of electric power application structures 30, and a clamp 60.

The reaction tube 20 has a passage for the reactant 12 to pass through formed in the longitudinal direction inside thereof, and an inlet 22 is formed at one end thereof and an outlet 24 is formed at the other end thereof. The reaction tube 20 is provided with a preheating portion 28 at the one end portion close to the inlet 22 in the longitudinal direction, and a reaction portion 26 is provided from the preheating portion 28 to the other end portion close to the outlet 24.

The preheating portion 28 is manufactured of an alloy material having high resistivity (for example, Ni-Cr, Fe-Cr, Fe-Ni-Cr, Fe-Cr-Al, and the like) and is electrically connected to the power source 40. The clamp 60 is mounted on the preheating portion 28, and the clamp 60 is connected to the power source 40 via the wire 42. When electric power from the power source 40 is supplied to the preheating portion 28 through the clamp 60, the preheating portion 28 generates heat and may preheat the reactant 12 inside the preheating portion 28. The reaction of the reactant 12 may be promoted by the preheated reactant 12 flowing into the reaction portion 26.

One of the electric power application structures 30 is disposed between the preheating portion 28 and the reaction portion 26, and the reaction portion 26 is provided between the pair of electric power application structures 30. The reaction portion 26 is a region where the reaction of the reactant 12 actually occurs, with the porous structure 50, on which the catalyst is coated or supported, being disposed inside. The porous structure 50 is electrically connected to the power source 40 through the pair of electric power application structures 30 or through the clamp 60, the preheating portion 28, and the pair of electric power application structures 30, and generates heat by the electric power from the power source 40, thereby heating the catalyst, and the heated catalyst promotes the reaction of the reactant 12 contacting it. According to the second embodiment of the present disclosure, since the reactant 12 is preheated in the preheating portion 28 before flowing into the reaction portion 26, the reaction of the reactant 12 may be further promoted.

The power source 40 is configured to be electrically connected to the pair of electric power application structures 30 and/or the clamp 60 via the wire 42 to supply electric power to the preheating portion 28 and the porous structure 50. FIG. 4 illustrates an example in which the power source 40 is connected to one electric power application structure 30 and the clamp 60 via the wire 42, but is not limited thereto. The power source 40 may also be electrically connected to both the pair of electric power application structures 30 and the clamp 60 via the wire 42.

The electrically heated reactor 10 may further include a cooler. The cooler may be configured to cool the connection portions of the electric power application structure 30 and the wire 42, the clamp 60 and the wire 42, and/or the electric power application structure 30 and the porous structure 50.

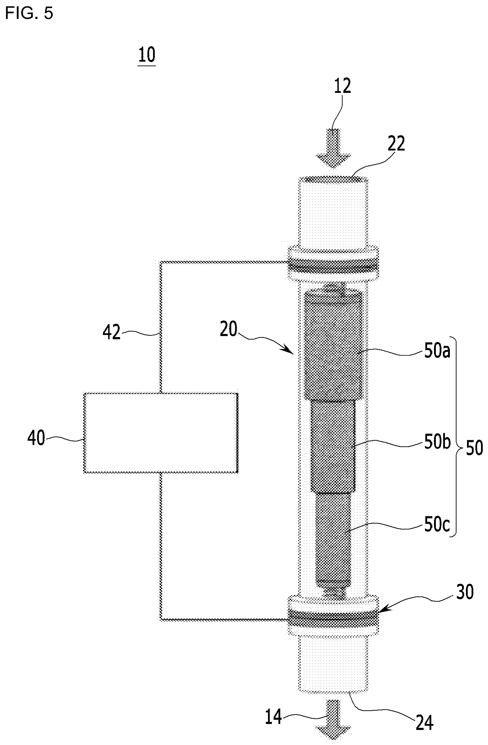

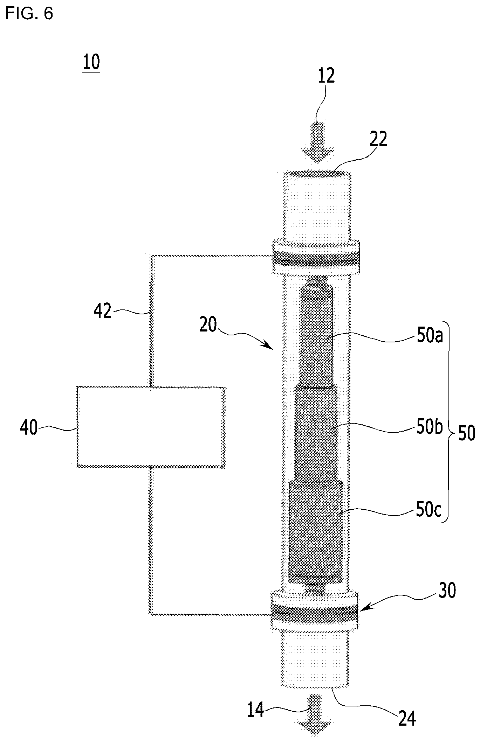

FIG. 5 is a schematic view illustrating an electrically heated reactor according to a third embodiment of the present disclosure, and FIG. 6 is a schematic view illustrating an electrically heated reactor according to a fourth embodiment of the present disclosure.

The electrically heated reactor 10 according to the third and fourth embodiments of the present disclosure includes a reaction tube 20, a porous structure 50, a power source 40, and a pair of electric power application structures 30. Here, according to the third and fourth embodiments of the present disclosure, the thickness of the porous structure 50 may be set at a corresponding position according to the amount of heat required at a specific position of the reaction tube 20.

In one example, referring to FIG. 5, the porous structure 50 includes first, second, and third zones 50a, 50b, and 50c along the flow direction of the reactant 12, and the areas of the first, second, and third zones 50a, 50b, and 50c are different from each other. More specifically, the area of the first zone 50a may be the largest, the area of the third zone 50c may be the smallest, and the area of the second zone 50b may be smaller than the area of the first zone 50a and larger than the area of the third zone 50c. The porous structure 50 illustrated in FIG. 5 may be used when the amount of heat required in the reaction tube 20 gradually decreases along the flow direction of the reactant 12.

In another example, referring to FIG. 6, the porous structure 50 includes first, second, and third zones 50a, 50b, and 50c along the flow direction of the reactant 12, and the areas of the first, second, and third zones 50a, 50b, and 50c are different from each other. More specifically, the area of the first zone 50a may be the smallest, the area of the third zone 50c may be the largest, and the area of the second zone 50b may be larger than the area of the first zone 50a and smaller than the area of the third zone 50c. The porous structure 50 illustrated in FIG. 6 may be used when the amount of heat required in the reaction tube 20 gradually increases along the flow direction of the reactant 12.

However, the number and areas of the zones of the porous structure 50 are not limited to those illustrated in FIG. 5 and FIG. 6, and the number and areas of the zones of the porous structure 50 may be set according to the amount of heat required at a specific position of the reaction tube 20.

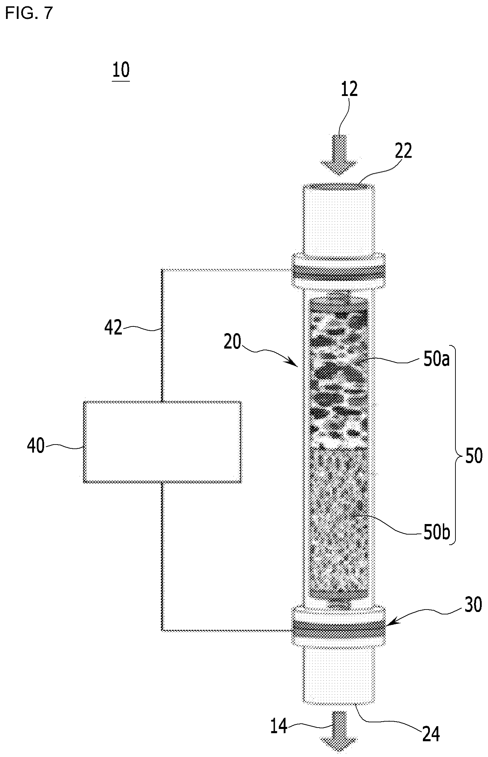

FIG. 7 is a schematic view illustrating an electrically heated reactor according to a fifth embodiment of the present disclosure.

The electrically heated reactor 10 according to the fifth embodiments of the present disclosure includes a reaction tube 20, a porous structure 50, a power source 40, and a pair of electric power application structures 30. Here, according to the fifth embodiment of the present disclosure, the pore size (or porosity) may be set at a corresponding position according to the amount of heat required at a specific position of the reaction tube 20.

In one example, referring to FIG. 7, the porous structure 50 includes first and second zones 50a and 50b along the flow direction of the reactant 12, and the pore size (or porosity) of the first and second zones 50a and 50b are different from each other. More specifically, the pore size (or porosity) of the first zone 50a may be relatively large, and the pore size (or porosity) of the second zone 50b may be relatively small. The porous structure 50 illustrated in FIG. 7 may be used when the amount of heat required in the reaction tube 20 gradually increases along the flow direction of the reactant 12.

However, the number of zones and the pore size (or porosity) of the porous structure 50 are not limited to those illustrated in FIG. 7, and the number of zones and the pore size (or porosity) of the porous structure 50 may be set according to the amount of heat required at a specific position of the reaction tube 20.

While this disclosure has been described in connection with what is presently considered to be practical embodiments, it is to be understood that the disclosure is not limited to the disclosed embodiments. On the contrary, it is intended to cover various modifications and equivalent arrangements included within the spirit and scope of the appended claims.

## Claims

1. An electrically heated reactor, comprising:
a reaction tube in which a passage through which a reactant flows is formed along a longitudinal direction therein;
a porous structure disposed within the reaction tube, having a catalyst coated or supported on a surface thereof, and generating heat upon receiving electric power;
a power source configured to supply electric power to the porous structure; and
a pair of power application structures respectively disposed at both end portions of the reaction tube, and connecting the power source and the porous structure so that electric power from the power source is supplied to the porous structure.

2. The electrically heated reactor of claim 1, wherein
the power application structure includes
a conductive porous plate provided at an end portion of the reaction tube and electrically connected to the power source; and
a conductive connector electrically connected to the conductive porous plate and contacting one end of the porous structure within the reaction tube to supply electric power from the power source to the porous structure.

3. The electrically heated reactor of claim 2, wherein
the power application structure further includes an insulator disposed between the conductive porous plate and an end portion of the reaction tube to electrically insulate the reaction tube from the conductive porous plate.

4. The electrically heated reactor of claim 3, wherein
the power application structure further includes an elastic member passing through the insulator and electrically and elastically connecting the conductive porous plate and the conductive connector.

5. The electrically heated reactor of claim 1, further comprising
a clamper mounted on one end portion of the reaction tube and electrically connected to the power source.

6. The electrically heated reactor of claim 5, wherein
the reaction tube includes
a preheating portion positioned between the clamper and one power application structure, and configured to receive electric power to generate heat; and
a reaction portion positioned between the pair of power application structures, and having the porous structure disposed therein.

7. The electrically heated reactor of claim 6, wherein
the preheating portion is positioned upstream of a reaction portion in a moving direction of a reactant.

8. The electrically heated reactor of claim 6, further comprising
a cooler configured to cool a connection portion between the power application structure and the power source, the clamper and the power source, and/or the power application structure and the porous structure.

9. The electrically heated reactor of claim 1, wherein
an area of the porous structure is at least partially varied in a longitudinal direction.

10. The electrically heated reactor of claim 9, wherein
an area of the porous structure at any location is set according to an amount of heat required at the corresponding location of the reaction tube.

11. The electrically heated reactor of claim 9, wherein
the porous structure is divided into a plurality of zones, and
an area of the porous structure in each zone is constant, and areas of the porous structure in different zones are different from each other.

12. The electrically heated reactor of claim 1, wherein
a pore size or porosity of the porous structure is at least partially varied in a longitudinal direction.

13. The electrically heated reactor of claim 12, wherein
a pore size or porosity of the porous structure at any location is set according to an amount of heat required at the corresponding location of the reaction tube.

14. The electrically heated reactor of claim 12, wherein
the porous structure is divided into a plurality of zones, and
the pore size or porosity of the porous structure in each zone is constant, and the pore sizes or porosities of the porous structure in different zones are different from each other.

15. The electrically heated reactor of claim 1, further comprising
a cooler configured to cool a connection portion between the power application structure and the power source and/or the power application structure and the porous structure.
